Europäisches Patentamt

European Patent Office

Office européen des brevets

(11) Veröffentlichungsnummer: **0 242 619**
**A2**

(12) # EUROPÄISCHE PATENTANMELDUNG

(21) Anmeldenummer: 87104349.3

(22) Anmeldetag: 24.03.87

(51) Int. Cl.⁴: **F25D 3/11** , //A23L3/36

(30) Priorität: 25.03.86 BE 216452

(43) Veröffentlichungstag der Anmeldung:
**28.10.87 Patentblatt 87/44**

(84) Benannte Vertragsstaaten:
**AT CH DE FR IT LI**

(71) Anmelder: **Linde Aktiengesellschaft**
**Abraham-Lincoln-Strasse 21**
**D-6200 Wiesbaden(DE)**

Anmelder: **MESSER GRIESHEIM GMBH**
**Hanauer Landstrasse 330**
**D-6000 Frankfurt/Main 1(DE)**

(72) Erfinder: **Aubry, Nestor**
**Avenue Nellie Melba**
**B-1070 Bruxelles(BE)**
Erfinder: **Couder, Armand**
**Daalstraat 69**
**B-1930 Zaventem(BE)**
Erfinder: **Weverbergh, André**
**Vuurgatstraat 18**
**B-1900 Overijse(BE)**

(74) Vertreter: **Schaefer, Gerhard, Dr.**
**Linde Aktiengesellschaft Zentrale**
**Patentabteilung**
**D-8023 Höllriegelskreuth(DE)**

(54) **Verfahren und Vorrichtung zum Kühlen.**

(57) Verfahren zum Kühlen oder Tiefgefrieren von Nahrungsmitteln oder Gegenständen mit einer Kühlflüssigkeit, z.B. einer kryogenen Flüssigkeit, bei dem ein sparsamer Umgang mit der Kühlflüssigkeit dadurch erzielt wird, daß die zu kühlenden Produkte in Form von einzelnen Portionen zumindest teilweise mit einer bestimmten Menge der vorgenannten Flüssigkeit in Berührung gebracht werden, wobei einerseits die Berührungszeit zwischen einer Portion und dieser Flüssigkeit und andererseits die Menge der letzteren solcherart gewählt werden, daß die Flüssigkeit vorzugsweise in dem Augenblick, in dem die betreffende Portion die erforderliche Kühltemperatur erreicht hat, nahezu vollständig verdunstet ist.

## Verfahren und Vorrichtung zum Kühlen

Die Erfindung bezieht sich auf ein Verfahren zum Kühlen, insbesondere zum Tiefgefrieren, von Produkten, wie Nahrungsmitteln und industriellen Grundstoffen, mittels einer Kühlflüssigkeit, wie einer kryogenen Flüssigkeit.

Zum Tiefgefrieren von Nahrungsmitteln kommen heute meistens zwei verschiedene Techniken zur Anwendung: das Tauchgefrieren und das Tunnel-oder Spiralgefrieren.

Das Tauchgefrieren weist den erheblichen Nachteil auf, daß der Verbrauch an kryogener Flüssigkeit verhältnismäßig hoch ist, während das Tunnel-oder Spiralgefrieren Investitionen größeren Ausmaßes erfordert und die entsprechenden Anlagen meist sehr viel Platz beanspruchen.

Außerdem weisen diese beiden bestehenden Techniken eine vergleichweise geringe Flexibilität auf und es ist schwer, eine bestimmte Anlage veränderlichen Gefrierbedingungen anzupassen.

Der Erfindung liegt in erster Linie die Aufgabe zugrunde, diese verschiedenen Nachteile zu beheben und ein Verfahren vorzuschlagen, das sehr leicht regulierbar ist und sich somit für stark voneinander abweichende Kühlbearbeitungen der verschiedensten Produkte eignet.

Hierzu werden die zu kühlenden Produkte in Form von einzelnen Portionen zumindest teilweise mit einer betimmten Menge der vorgenannten Flüssigkeit in Berührung gebracht, wobei einerseits die Berührungszeit zwischen einer Portion und dieser Flüssigkeit und andererseits die Menge der letzteren solcherart gewählt werden, daß die Flüssigkeit vorzugsweise in dem Augenblick nahezu vollständig verdunstet ist, in dem die betreffende Portion die erforderliche Kültemperatur erreicht hat.

Zweckmäßigerweise werden die zu kühlenden Produkte portionsweise zumindest teilweise in eine bestimmte Menge der vorgenannten Kühlflüssigkeit eingetaucht.

Die Erfindung bezieht sich zudem auf eine Vorrichtung zum Kühlen, insbesondere Tiefgefrieren, von Produkten, wie Nahrungsmitteln und industriellen Grundstoffen, mittels einer Kühlflüssigkeit, insbesondere auf eine Vorrichtung für die Anwendung des oben beschriebenen Verfahrens.

Diese Vorrichtung ist dadurch gekennzeichnet, daß sie einen durchlaufenden Transportmechanismus aufweist, der sich in eine bestimmte Richtung bewegen kann und auf dem sich eine Anzahl von aufeinanderfolgenden, oben offenen Fächern befinden, in welchen je eine Portion des zu kühlenden Produktes untergebracht werden kann, wobei kurz nach dem Anfang des Transportmechanismus eine Beladevorrichtung der vorgenannten Fächer für die zu kühlenden Produkte einerseits und für die Kühlflüssigkeit andererseits sowie kurz vor dem Ende des Transportmechanismus eine Entnahmevorrichtung für die gekühlten Produkte vorgesehen sind.

In einer besonderen Ausführungsform der Erfindung weist der Transportmechanismus eine in einer bestimmten Richtung um ihre Achse rotierende Trommel auf, auf der eine Reihe von sich axial erstreckenden Zwischenwänden vorgesehen ist, welche in etwa gleichmäßig über die Zylinderwand der Trommel verteilt sind und welche somit auf dieser Wand aufeinanderfolgende, nahezu identische Fächer bilden.

In einer bevorzugten Ausführungsform der Erfindung ist die Trommel um ihre Achse drehbar in einem nahezu koaxialen, mindestens teilweise kreisförmigen Gehäuse, dessen Durchmesser etwas größer als derjenige der mit Zwischenwänden ausgestatteten Trommel ist, dergestalt montiert, daß zwischen dem Gehäuse und den freien Enden der Zwischenwände ein ringförmiger Raum entsteht, über den die verdunstete Kühlflüssigkeit aus den Fächern austreten kann, wobei die Beladevorrichtung für die Kühlflüssigkeit und die Beladevorrichtung für die zu kühlenden Produkte zu den Fächern sich an der Oberseite des Gehäuses befinden und die Entnahmevorrichtung der gekühlten Produkte nahezu diametral entgegengesetzt an der Unterseite des Gehäuses vorgesehen ist.

Sonstige Einzelheiten und Vorteile der Erfindung gehen aus der nachstehenden Beschreibung einer spezifischen Ausführungsform der Erfindung hervor; diese Beschreibung wird lediglich als Beispiel aufgeführt und schränkt die Tragweite der Erfindung nicht ein; die im folgenden verwendeten Bezugsziffern beziehen sich auf die zugeordneten Figuren.

Figur 1 stellt einen senkrechten Querschnitt durch eine gemäß dieser spezifischen Ausführungsform ausgebildete Vorrichtung zum Kühlen von Produkten dar.

Figur 2 ist ein senkrechter Querschnitt durch das bewegliche Teil dieser Ausführungsform in einer anderen Stellung .

Figur 3 ist ebenfalls ein senkrechter Querschnitt des gleichen beweglichen Teils, das sich wiederum in einer anderen Stellung befindet.

In diesen drei Figuren beziehen sich die gleichen Bezugszahlen auf die gleichen Elemente.

Die Erfindung bezieht sich auf ein Verfahren zum Kühlen, insbesondere Tiefgefrieren, von Produkten, wie Nahrungsmitteln und industriellen Grundstoffen mittels einer Külflüssigkeit, wie flüssigem Stickstoff, welches hauptsächlich darin besteht, daß die zu kühlenden Produkte in Form von einzelnen Portionen zumindest teilweise mit einer bestimmten Menge der vorgenannten Flüssigkeit in Berührung gebracht werden, wobei einerseits die Berührungszeit zwischen einer bestimmten Portion und dieser Flüssigkeit und andererseits die Menge der letzteren solcherart gewählt werden, daß die Flüssigkeit vorzugsweise in dem Augenblick, in dem die betreffende Portion die erforderliche Kühltemperatur erreicht hat, nahezu vollständig verdunstet ist.

Meistens wird es - vor allem beim Tiefgefrieren -vorgezogen, die Portionen zumindest teilweise in eine bestimmte Menge einer kryogenen Flüssigkeit einzutauchen.

In manchen Fällen wird die Kühlflüssigkeit in Form feiner Tröpfchen auf die genannten Portionen verteilt, um einen engen Kontakt zwischen den zu kühlenden Portionen und dieser Flüssigkeit zu gewährleisten. Dies erfolgt vorzugsweise bei der Beladung und/oder Portionierung dieser Produkte.

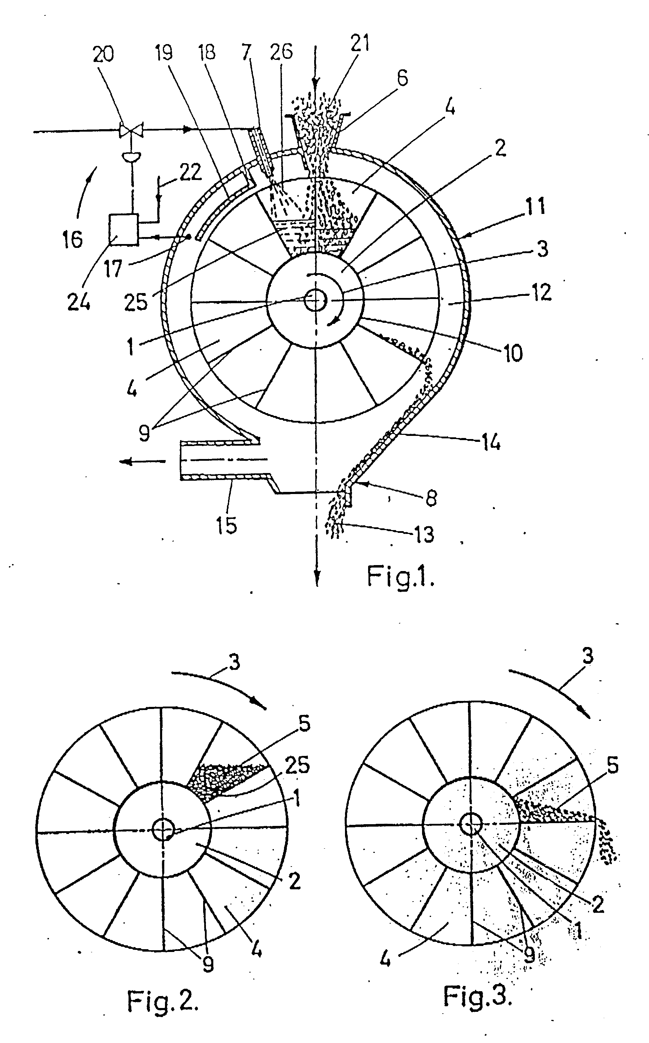

Da das Tiefgefrieren als eine wichtige Anwendung des erfindungsgemäßen Verfahrens anzusehen ist, wird diese spezifische Anwendung anhand der Figuren 1 und 3, die eine bevorzugte Vorrichtung zur Anwendung des oben summarisch beschriebenen Verfahrens darstellen, detailliert illustriert.

Diese Vorrichtung weist einen Transportmechanismus auf, der aus einer um ihre Achse 1 in die vom Pfeil 3 bezeichnete Richtung rotierenden Trommel 2 besteht. Auf dieser Trommel sind eine Anzahl von aufeinanderfolgenden Fächern 4 vorgesehen, in welche je eine Portion 5 eines zu gefrierenden Produktes untergebracht werden kann.

Am Anfang dieses Transportmechanismus, der in dieser spezifischen Ausführungsform oben angeordnet ist, sind eine Beladevorrichtung 6 für die zu gefrierenden Produkte 21 und eine weitere Beladevorrichtung 7 für die Kühlflüssigkeit vorgesehen, welche aus einer kryogenen Flüssigkeit 26 besteht, während am Ende des Transportmechanismus eine Entnahmevorrichtung 8 für die gefrorenen Produkte 13 vorgesehen ist, die sich in dieser spezifischen Ausführungsform an der Unterseite befindet, der Beladevorrichtung 6 nahezu diametral entgegengesetzt.

Bezogen auf die Bewegungsrichtung 3 der Trommel 2 befindet sich die Beladevorrichtung 7 für die kryogene Flüssigkeit vor der Beladevorrichtung der zu gefrierenden Produkte 13.

Die Fächer 4 auf der Trommel 2 werden durch eine Reihe von sich axial erstreckenden · Zwischenwänden 9 gebildet, die in etwa gleichmäßig über die Zylinderwand 10 der Trommel verteilt sind.

Des weiteren ist die Trommel 2 um ihre Achse 1 drehbar in einem koaxialen, mindestens teilweise zylinderförmigen Gehäuse 11 angeordnet, dessen Durchmesser etwas größer ist als der Durchmesser der mit Zwischenwänden 9 versehenen Trommel 2, solcherart, daß zwischen dem Gehäuse 11 und den freien Enden der Zwischenwände 9 ein ringförmiger Raum 12 entsteht, über den die verdunstete kryogene Flüssigkeit aus den Fächern 4 austreten kann.

Die Beladevorrichtung 6 für die zu gefrierenden Produkte 21 und die Beladevorrichtung 7 für die kryogene Flüssigkeit befinden sich denn auch an der Oberseite des Gehäuses 11, während die Entnahmevorrichtung 8 der gefrorenen Produkte 13 sich an der trichterförmigen Unterseite 14 des Gehäuses 11 befindet.

Seitlich an dieser trichterförmigen Unterseite 14 ist eine Absaugleitung 15 für die verdunstete kryogene Flüssigkeit vorgesehen, die mit einem nicht dargestellten Ventilator in Verbindung steht.

Die Beladevorrichtung 7 für die kryogene Flüssigkeit besteht in dieser spezifischen Ausführungsform aus einem oder mehreren Sprühern, die im Gehäuse 11 über den Fächern 4 angeordnet sind.

Ferner ist ein Regelsystem 16 zur Bestimmung der Menge an kryogener Flüssigkeit für jede Portion zu gefrierenden Produktes vorgesehen.

Dieses Regelsystem 16 umfaßt einen Temperaturfühler 17, der sich vor der Beladevorrichtung der kryogenen Flüssigkeit im Gehäuse 11 befindet, an einer mittels einer Platte 18 zu dieser Beladevorrichtung 7 hin abgeschirmten Stelle.

Diese Platte 18 kann gegebenenenfalls mit einem Verlängerungsteil 19 ausgestattet werden, wie dies in Figur 1 dargestellt ist, das dicht an die Fächer anschließt und somit verhindert, daß Dämpfe der kryogenen Flüssigkeit direkt von der Beladevorrichtung 7 zu der Stelle, an der sich der Temperaturfühler 17 befindet, gelangen und so über die Leitung 15 direkt abgesaugt werden.

Dieser Temperaturfühler 17 steuert ein Regelventil 20, das die Fördermenge in der Beladevorrichtung 7 der kryogenen Flüssigkeit regelt. ·

Neben einem ·Temperaturfühler 17 ist außerdem ein nicht dargestellter Detektor zum Messen der Fördermenge der den Fächern 4 zugeführten zu gefrierenden Produkte 21 und zur Regelung der Fördermenge der kryogenen Flüssigkeit 26 in der Beladevorrichtung 7 in Abhängigkeit von der Fördermenge der zugeführten zu gefrierenden Produkte 21 vorgesehen.

Das Beladen der zu gefrierenden Produkte 21 erfolgt vorzugsweise kontinuierlich, beispielsweise in Schüttladungen, und wird mittels der um ihre Achse 1 rotierenden Trommel 2 automatisch auf die Fächer 4 in Portionen 5 verteilt, wobei in jedes dieser Fächer eine genau bestimmte Menge an kryogener Flüssigkeit 25 vorzugsweise vorher eingeführt wird, in welche diese Portionen mindestens teilweise eingetaucht werden.

Das Einbringen dieser Menge an kryogener Flüssigkeit in die Fächer 4 kann in manchen Fällen gleichzeitig mit den zu gefrierenden Produkten oder sogar kurz danach erfolgen, so daß diese mit der Flüssigkeit besprengt werden. Im letzteren Fall werden die zu gefrierenden Produkte nicht notwendigerweise in die kryogene Flüssigkeit eingetaucht.

Schließlich kann noch erwähnt werden, daß die Achse der Trommel vorzugsweise mittels eines Motors mit regelbarer Geschwindigkeit angetrieben wird, beispielsweise in Abhängigkeit von der erforderlichen Menge an kryogener Flüssigkeit für jede Portion.

Die Arbeitsweise der in den Figuren dargestellten Vorrichtung läßt sich folgendermaßen beschreiben.

Zunächst wird der vom Gehäuse 11 eingeschlossene Raum vorgekühlt, wobei die Vorkühltemperatur, die mit dem Temperaturfühler 17 gemessen wird, eine Funktion der für jede Einheit gefrorenen Produktes 13 benötigten Kältemenge ist.

Sodann wird das zu gefrierende Produkt 21 an der Oberseite des Gehäuses 11 kontinuierlich über die trichterförmige Beladevorrichtung 6 auf die Fächer 4 der in Richtung 3 um ihre Achse 1 drehenden Trommel 2 in Portionen verteilt.

Sobald der nicht dargestellte Detektor den Durchgang der zu gefrierenden Produkte 21 an der Beladevorrichtung 6 registriert, wird ein Ausgangssignal über Leitung 22 und das Regelelement 24 zum Regelventil 20 gegeben, das eine Regelung der zugeführten Menge an kryogener Flüssigkeit 26 zum Fach 4 hin erlaubt, das sich in kurzer Entfernung vor der Stelle, an der die zu gefrierenden Produkte eingebracht werden, befindet, solcherart, daß in dem Augenblick, in dem die zu gefrierenden Produkte in ein Fach gefüllt werden, dies bereits teilweise mit kryogener Flüssigkeit gefüllt ist, wie deutlich aus Figur 1 hervorgeht. Während der weiteren Rotation der Trommel 2 in Richtung 3 verdunstet die kryogene Flüssigkeit allmählich und es werden somit die Kälteeinheiten dieser letzteren auf das zu gefrierende Produkt übertragen.

Die Menge der in die einzelnen Fächer eingebrachten kryogenen Flüssigkeit 25 ist solcherart, daß in dem Augenblick, in dem eine bestimmte Portion zu gefrierender Produkte aus einem Fach 4 entfernt wird, wie in Figur 3 dargestellt, nahezu die gesamte Menge an kryogener Flüssigkeit aus diesem Fach verdunstet ist.

Die Rotationsgeschwindigkeit der Trommel, der Temperaturfühler 17 und gegebenenfalls der nicht dargestellte Detektor, die auf das Regelelement 24 einwirken, welches das Regelventil 20 steuert, dosieren die mit dem Sprüher oder den Sprühern 7 in die einzelnen Fächer 4 eingebrachte Menge an kryogener Flüssigkeit in solcher Weise, daß diese verbleibende kryogene Flüssigkeit, die in dem Augenblick, in dem eine Portion aus einem bestimmten Fach entnommen wird, noch vorhanden ist, nahe null ist.

Die solchermaßen tiefgefrorenen Produkte 13 werden sodann über die trichterförmige Entnahmevorrichtung 8 an der Unterseite 14 des Gehäuses 11 abgeführt, während der nicht dargestellte Ventilator die Dämpfe der kryogenen Flüssigkeit über die Leitung 15 absaugt.

In bestimmten Fällen werden diese gefrorenen Produkte auf einem nicht dargestellten Förderband mit Wasser besprengt, das um die Produkte herum gefriert und auf diese Weise eine Schutzschicht bildet. Dabei handelt es sich um eine an sich bekannte Technik, die "glasieren" genannt wird.

Die Erfindung wird im folgenden anhand einiger spezifischer Anwendungsbeispiele weiter illustriert.

Ziel der ersten beiden Beispiele ist das Glasieren von grauen Garnelen, Scampi, Calamares, Ostseegarnelen usw..

Dieses Glasieren erfolgt dadurch, daß das Produkt zunächst auf eine solche Temperatur tiefgefroren wird, daß die gespeicherten Kälteeinheiten dazu ausreichen, daß um das Produkt herum eine bestimmte Wassermenge auf solche Weise in Eis umgewandelt wird, daß das tiefgefrorene Produkt vollständig von der Umgebungsluft abgeschirmt ist.

Beispiel 1

In einem ersten Schritt werden Garnelen in einer an sich bekannten Tauchgefriervorrichtung mit chloriertem Kohlenwasserstoff, insbesondere einem Fluorchlorkohlenwasserstoff ("Freon"), tiefgefroren und danach glasiert, so daß sich eine Gewichtszunahme von 15 %, bezogen auf das Endprodukt, ergibt.

Die Temperatur am Eingang der Tauchgefriervorrichtung beträgt -10 °C. Die Menge des fertigen Produktes beträgt 572 kg/h inklusive 15 % Eis oder 486 kg Produkt zuzüglich 86 kg Eis.

Sodann werden in einem zweiten Schritt die solchermaßen teilweise glasierten Produkte in eine Vorrichtung gemäß Figur 1 geleitet.

Nach einem weiteren Tiefgefrieren werden sie von neuem mit einer Fördermenge von 666 kg/h inklusive 94 kg/h Eis glasiert, was einem Gesamt-Glasierprozentsatz von $\frac{180}{666}$ x 100 = 27 % entspricht.

Der partielle Glasierprozentsatz beträgt:

$$\frac{666 - 572}{666} = 14\ \%.$$

Der Verbrauch an flüssigem Stickstoff betrug 592 kg/h oder 0,89 kg flüssigem Stickstoff je kg Endprodukt oder 1,03 kg flüssigem Stickstoff je kg angebotenem vorglasiertem Produkt.

### Beispiel 2

In einem ersten Schritt werden Garnelen in einer an sich bekannten Tauchgefriervorrichtung mit chloriertem Kohlenwasserstoff, insbesondere "Freon", einem Fluorkohlenwasserstoff, tiefgefroren und danach glasiert, so daß sich eine Gewichtszunahme von 15 %, bezogen auf das Endprodukt, ergibt.

Die Temperatur am Eingang der Tauchgefriervorrichtung beträgt - 10 %C. Die Menge an angebotenem Produkt beträgt 887 kg/h inklusive 15 % Eis oder 754 kg Produkt zuzüglich 133 kg Eis.

Sodann werden in einem zweiten Schritt die solchermaßen glasierten Produkte in eine Vorrichtung gemäß Figur 1 geleitet, wo sie tiefgefroren werden, wodurch ein nicht zusammenklebendes Produkt erhalten werden soll.

Der Verbrauch an flüssigem Stickstoff betrug 420 kg/h oder 0,47 kg flüssigen Stickstoff pro kg Endprodukt oder 0,56 kg flüssigen Stickstoff pro kg angebotenem nichtglasiertem Produkt.

### Beispiel 3

Hierbei handelt es sich um ein Verfahren zum Kaltmahlen von Gummi, der meist aus Produktionsabfällen oder von Laufflächen alter Autoreifen stammt.

In diesem spezifischen Beispiel wird von einem Grundstoff ausgegangen, der aus Streifen mit den ungefähren Abmessungen 300 mm Länge, 200 mm Breite und 15 mm Dicke besteht. Diese Grundstoffe müssen gemahlen werden, so daß ein Produkt mit den nachstehenden Spezifikationen erhalten wird.:
-90 % mit einem Durchmesser unter 400 Mym (= 0,400 mm)
-67 % mit einem Durchmesser unter 315 Mym (= 0,315 mm)
-30 % mit einem Durchmesser unter 250 Mym (= 0,250 mm)
-21 % mit einem Durchmesser unter 200 Mym (= 0,200 mm).

Zunächst werden die Streifen in einer Messermühle zu einem Granulat von 6 x 6 mm vorgeschnitten. Es handelt sich dabei um eine an sich bekannte Messermühle mit einer Leistung von 30 kW, in der das Schneiden bei normaler Temperatur ohne Stickstoffkühlung erfolgt. Sodann wird das Granulat mit flüssigem Stickstoff in einer Vorrichtung wie in Figur 1 dargestellt gekühlt. Die relative Fördermenge dieses Granulats und der verwendete flüssige Stickstoff werden so geregelt, daß das Granulat aus der Vorrichtung mit einer Temperatur in der Größenordnung von ca. -90 bis -100 °C austritt. In einer Scheibenmühle wird anschließend das so gekühlte Granulat weiter bis zur gewünschten Korngröße gemahlen. Es handelt sich dabei ebenfalls um eine an sich bekannte Mühle, die mit zwei sich entgegengesetzt zueinander drehenden und mit Zapfen versehenen Scheiben ausgerüstet ist, zwischen denen der Mahlvorgang stattfindet.

Schließlich wird dieses sehr fein gemahlene Granulat bei zunehmender Temperatur von -60 °C bis nahezu - 15 °C, pneumatisch zu einer Sortiervorrichtung geführt, wo es in ein Produkt mit einem Korndurchmesser über 500 Mym (= 0,500 mm) un ein Produkt mit einem Korndurchmesser von weniger als 500 Mym getrennt wird. Die Temperatur dieser beiden Produkte liegt im allgemeinen in der Größenordnung von 0 °C.

Die Erfindung ist selbstverständlich keineswegs beschränkt auf die oben beschriebenen Ausführungsformen, und im Rahmen des beantragten Schutzumfangs können mehrere Veränderungen erwogen werden, unter anderem in bezug auf die Konstruktion und Abmessungen der Teile, aus der die Vorrichtung besteht.

So können die Fächer beispielsweise durch Kippbehälter gebildet werden, die um ein Scharnier drehbar zur Zylinderwand der Trommel aufgehängt und nur in der Höhe der Entnahmevorrichtung geleert werden. Dies kann gegebenenfalls im Vergleich mit einer Vorrichtung mit festen Fächern den Vorteil aufweisen, daß gegebenenfalls eine relativ größere Menge an Kühlflüssigkeit je Fach vorgesehen werden kann, da diese Flüssigkeit erst verdunstet sein muß, wenn die Trommel eine Umdrehung von 180 ° beschrieben hat, während bei der beschriebenen Ausführungsform die Gesamtmenge an kryogener Flüssigkeit nach einer Umdrehung von etwa 90 ° bereits verdunstet sein muß. Andererseits kann man argumentieren, daß bei dieser geänderten Ausführungsform die Berührungszeit für die gleiche Umdrehungsgeschwindigkeit der Trommel relativ wesentlich länger ist.

Auch kann in manchen Fällen der Transportmechanismus durch ein Förderband gebildet werden, auf dem sich Fächer beispielsweise in Form von festen Behältern befinden.

Schließlich kann, beispielsweise wenn die Kühlung oberhalb der Tiefgefriertemperatur bleibt, gegebenenfalls eine Kühlflüssigkeit zur Anwendung kommen, die nicht notwendigerweise in dem Augenblick verdunstet sein muß, in dem die angestrebte Kühltemperatur erreicht wird. In diesem Fall kann die verwendete, nicht verdunstete Kühlflüssigkeit gegebenenfalls einfach zurückgeführt werden.

## Ansprüche

1. Verfahren zum Kühlen, insbesondere zum Tiefgefrieren, von Produkten, wie beispielsweise Nahrungsmitteln und industriellen Grundstoffen, mittels einer Kühlflüssigkeit, insbesondere einer kryogenen Flüssigkeit, dadurch gekennzeichnet, daß die zu kühlenden Produkte in Form von einzelnen Portionen zumindest teilweise mit einer bestimmten Menge der vorgenannten Flüssigkeit in Berührung gebracht werden, wobei einerseits die Berührungszeit zwischen einer Portion und dieser Flüssigkeit und andererseits die Menge der letzteren solcherart gewählt werden, daß die Flüssigkeit vorzugsweise in dem Augenblick, in dem die betreffenden Portionen die erforderliche Kühltemperatur erreicht hat, nahezu vollständig verdunstet ist.

2. Verfahren nach Anspruch 1, dadurch gekennzeichnet, daß die zu kühlenden Produkte portionsweise zumindest teilweise in eine bestimmte Menge der vorgenannten Kühlflüssigkeit eingetaucht werden.

3. Verfahren nach Anspruch 1 oder 2, dadurch gekennzeichnet, daß die Kühlflüssigkeit auf die obengenannten Portionen in Form von feinen Tröpfchen verteilt wird.

4 Verfahren nach Anspruch 3, dadurch gekennzeichnet, daß die Kühlflüssigkeit während des Beladevorgangs der Portionen auf diese verteilt wird.

5. Verfahren nach einem der Ansprüche 1 bis 4, dadurch gekennzeichnet, daß die verdunstete Kühlflüssigkeit getrennt von den gekühlten Produkten abgesaugt wird.

6. Verfahren nach einem der Ansprüche 1 bis 5, dadurch gekennzeichnet, daß die erforderliche Menge an Kühlflüssigkeit für jede Portion durch Messung der Temperatur der Umgebung, in der die Kühlung der Produkte erfolgt, geregelt wird.

7. Verfahren nach einem der Ansprüche 1 bis 6, dadurch gekennzeichnet, daß die Fördermenge der zu kühlenden Produkte, die eine Funktion des Volumens der Portionen ist, zur Bestimmung der für jede Portion erforderlichen Menge an Kühlflüssigkeit gemessen wird.

8. Verfahren nach einem der Ansprüche 1 bis 7, dadurch gekennzeichnet, daß die zu kühlenden Produkte nahezu kontinuierlich als Schüttgut angeführt und in Portionen verteilt werden, von denen jede getrennt mindestens teilweise in eine bestimmte Menge von Kühlflüssigkeit eingetaucht wird.

9. Verfahren zum Kühlen, insbesondere Tiefgefrieren, von Produkten, wie Nahrungsmitteln und industriellen Grundstoffen, mittels einer Kühlflüssigkeit, wie oben beschrieben oder aus den beigefügten Zeichnungen ersichtlich ist.

10. Vorrichtung zum Kühlen, insbesondere Tiefgefrieren, von Produkten, wie Nahrungsmitteln und industriellen Produkten, mittels einer Kühlflüssigkeit, insbesondere eine Vorrichtung zur Anwendung des Verfahrens gemäß Anspruch 1 bis 9, dadurch gekennzeichnet, daß sie einen durchgehenden Transportmechanismus aufweist, der sich in eine bestimmte Richtung bewegen kann und auf dem sich eine Anzahl von aufeinanderfolgenden, an der Oberseite offenen Fächern befindet, in die je eine Portion eines zu kühlenden Produktes untergebracht werden kann, wobei kurz nach dem Anfang des Transportemechanismus eine Beladevorrichtung zu den vorgenannten Fächern für die zu kühlenden Produkte einerseits und für die Kühlflüssigkeit andererseits sowie kurz vor dem Ende des Transportmechanismus eine Entnahmevorrichtung für die abgekühlten Produkte vorgesehen sind.

11. Vorrichtung nach Anspruch 10, dadurch gekennzeichnet, daß hinsichtlich der Bewegungsrichtung des Transportmechanismus die Beladevorrichtung für die Kühlflüssigkeit vor der Beladevorrichtung der zu kühlenden Produkte angeordnet ist.

12. Vorrichtung nach einem der Ansprüche 10 oder 11, dadurch gekennzeichnet, daß ein Absaugventilator vorgesehen ist, der kurz vor dem Ende des Transportmechanismus die verdunstete Kühlflüssigkeit absaugen kann.

13. Vorrichtung nach einem der Ansprüche 10 bis 12, dadurch gekennzeichnet, daß die Beladevorrichtung für Kühlflüssigkeit aus mindestens einem Sprüher besteht, der über den vorgenannten Fächern montiert ist.

14. Vorrichtung nach einem der Ansprüche 10 bis 13, dadurch gekennzeichnet, daß sie mit einem Regelsystem zur Bestimmung der Menge an Kühlflüssigkeit für jede Portion zu kühlenden Produktes versehen ist, mit mindestens einem Temperaturfühler, der sich in dem Raum befindet, in dem sich der Transportmechanismus bewegt, und vor der Beladevorrichtung für die Kühlflüssigkeit, an einer von dieser Beladevorrichtung einigermaßen abgeschirmten Stelle, wobei dieser Temperaturfühler ein Regelventil steuert, welches die Fördermenge in der Beladevorrichtung für die Kühlflüssigkeit regelt.

15. Vorrichtung nach einem der Ansprüche 10 bis 14, dadurch gekennzeichnet, daß ein Detektor zur Messung der Fördermenge der den Fächern zugeführten, zu kühlenden Produkte und zur Regelung der Fördermenge der Kühlflüssigkeit zu den Fächern in Abhängigkeit von der Fördermenge der zugeführten zu kühlenden Produkte vorgesehen ist.

16. Vorrichtung nach einem der Ansprüche 10 bis 15, dadurch gekennzeichnet, daß der Transportmechanismus eine sich in eine bestimmte Richtung um ihre Achse rotierende Trommel aufweist, auf der eine Reihe von sich axial erstreckenden Zwischenwänden vorgesehen sind, die nahezu gleichmäßig über die Zylinderwand der Trommel verteilt sind und die somit auf dieser gesamten Wand aufeinanderfolgende, nahezu identische Fächer bilden.

17. Vorrichtung nach Anspruch 16, dadurch gekennzeichnet, daß die Trommel um ihre Achse drehbar in einem nahezu koaxialen, mindestens teilweise zylinderförmigen Gehäuse, dessen Durchmesser etwas größer ist als jener der mit Zwischenwänden ausgestatteten Trommel, montiert ist, solcherart, daß zwischen dem Gehäuse und den freien Enden der Zwischenwände ein ringförmiger Raum entsteht, über den die verdunstete Kühlflüssigkeit aus den Fächern austreten kann, wobei sich die Beladevorrichtung für die Kühlflüssigkeit und die Vorrichtung zum Beladen der Fächer mit den zu kühlenden Produkten an der Oberseite des Gehäuses befinden und die Entnahmevorrichtung der gekühlten Produkte nahezu diametral entgegengesetzt an der Unterseite des Gehäuses vorgesehen ist.

18. Vorrichtung nach Anspruch 17, dadurch gekennzeichnet, daß sich in der Nähe der genannten Entnahmevorrichtung eine Absaugleitung für die verdunstete Kühlflüssigkeit am Gehäuse anschließt.

19. Vorrichtung nach einem der Ansprüche 16 bis 18, dadurch gekennzeichnet, daß die Achse der Trommel durch einen Motor mit regelbarer Geschwindigkeit angetrieben wird.

20. Vorrichtung zum Kühlen, insbesondere Tiefgefrieren, von Produkten, wie Nahrungsmitteln und industriellen Grundstoffen, wie sie oben beschrieben oder in den beigefügten Zeichnungen dargestellt ist.

0 242 619

Fig.1.

Fig.2.

Fig.3.